# EUROPEAN PATENT APPLICATION

(11) **EP 4 580 203 A1**
(43) Date of publication of application: **02.07.2025**
(21) Application number: 23870309.4
(22) Date of filing: 12.09.2023
(51) Int. Cl.: H04N 23/60, H04N 23/667

(54) **PHOTOGRAPHING METHOD, AND ELECTRONIC DEVICE AND MEDIUM**

(30) Priority: 27.09.2022 CN 202211184777
(71) Applicant: Huawei Technologies Co., Ltd., Shenzhen, Guangdong 518129 (CN)
(72) Inventor: SUN, Tao, Shenzhen, Guangdong 518129 (CN)
(74) Representative: Gill Jennings & Every LLP
(86) International application number: PCT/CN2023/118306
(87) International publication number: WO 2024/067071

(57) **Abstract**

This application relates to the field of image shooting technologies, and discloses an image shooting method, an electronic device, and a medium. The image shooting method includes: detecting that the electronic device turns on a first camera; when determining that a current image shooting scene is a low-light image shooting scene, in response to an image shooting instruction of a user, obtaining a first image shot based on the first camera and a second image shot based on a second camera, where a focal length of the first camera is greater than a focal length of the second camera; and generating a shot image based on luminance feature information corresponding to the first image and the second image. The first camera may be a long-focus camera, and the second camera may be a primary camera. Based on the foregoing image shooting method, photosensitivity of an image obtained in a long-focus low-light image shooting scene can be effectively improved, and image quality can be improved.

## Description

This application claims priority to Chinese Patent Application No. 202211184777.9, filed with the China National Intellectual Property Administration on September 27, 2022 and entitled "IMAGE SHOOTING METHOD, ELECTRONIC DEVICE, AND MEDIUM", which is incorporated herein by reference in its entirety.

### TECHNICAL FIELD

This application relates to the field of image shooting technologies, and in particular, to an image shooting method, an electronic device, and a medium.

### BACKGROUND

Currently, a mobile phone is usually equipped with a plurality of cameras, to meet user requirements in various image shooting scenes. The plurality of cameras may include cameras with a plurality of focal ranges, for example, may include a short-focus (wide-angle) camera, a medium-focus (primary) camera, and a long-focus camera. Different cameras correspond to different fields of view and zoom ratios. During image shooting, the user may switch, by adjusting ratios, between cameras with different focal ranges for image shooting.

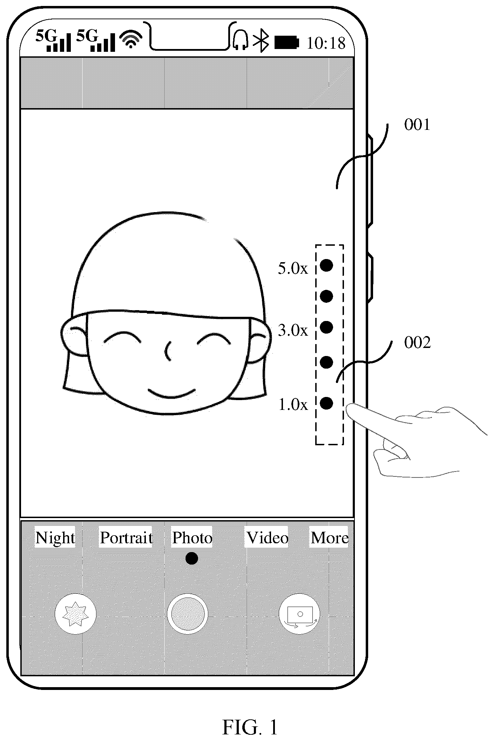

For example, as shown in FIG. 1, a user may adjust an image shooting focal length or an image shooting lens for a preview image in a ratio adjustment area 002 of a preview interface 001 of a camera application on a mobile phone. For example, when a ratio is adjusted to "1.0×", it indicates that the preview image is obtained by using a primary camera (for example, a camera with a focal length of 27 millimeters) of the mobile phone. "5.0×" indicates that the preview image is obtained by using a long-focus lens (for example, a camera with a focal length of 125 millimeters) of the mobile phone.

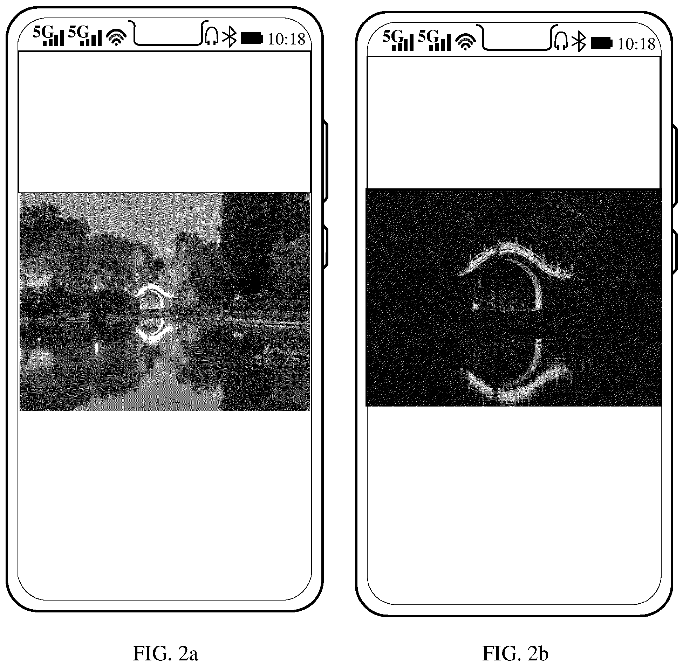

Currently, during night shooting, the primary camera is usually used for zoom shooting. However, as shown in FIG. 2a, definition of an obtained image is low. Therefore, some users use long-focus cameras to perform night shooting. However, as shown in FIG. 2b, photosensitivity of an obtained image is low.

To improve effect of performing night shooting by using a long-focus camera, some solutions such as a solution of increasing a size of a sensor corresponding to the long-focus camera or increasing an aperture of the long-focus camera are used to improve photosensitivity of a shot image. However, in these solutions, a size of an entire device is increased, and image shooting effect is slightly improved. In some other solutions, in a long-focus image shooting mode, photosensitivity of a shot image is improved by using a long-exposure method, but the image shot with long exposure is prone to blur.

### SUMMARY

To resolve the foregoing problem, embodiments of this application provide an image shooting method, an electronic device, and a medium.

According to a first aspect, embodiments of this application provide an image shooting method, applied to an electronic device. The electronic device includes a first camera and a second camera. The method includes: detecting that the electronic device turns on a first camera; when determining that a current image shooting scene is a low-light image shooting scene, in response to an image shooting instruction of a user, obtaining a first image shot based on the first camera and a second image shot based on the second camera, where a focal length of the first camera is greater than a focal length of the second camera; and generating a shot image based on luminance feature information corresponding to the first image and the second image.

It may be understood that, in this embodiment of this application, the first camera may be a long-focus camera, and the second camera may be a primary camera. Photosensitivity of a primary-camera image is good, and details in a long-focus image are clear. Therefore, in this embodiment of this application, after luminance feature information of the primary-camera image is fused with the long-focus image, a clear image with good photosensitivity can be obtained. In other words, based on the foregoing image shooting method, photosensitivity of an image obtained in a long-focus low-light image shooting scene can be effectively improved, and image quality can be improved.

In a possible implementation, the method includes: The electronic device turns on the first camera when detecting that the user selects an image shooting parameter greater than or equal to a specified ratio.

In a possible implementation, a manner of determining that the current image shooting scene is the low-light image shooting scene includes: obtaining ambient light luminance; and when the ambient light luminance is less than a specified value, determining that the current image shooting scene is the low-light image shooting scene.

In a possible implementation, a manner of determining that the current image shooting scene is the low-light image shooting scene includes: obtaining a preview image based on the first camera; determining an average value of pixels in the preview image; and when the average value is less than a specified value, determining that the current image shooting scene is the low-light image shooting scene.

In a possible implementation, a manner of determining that the current image shooting scene is the low-light image shooting scene includes: obtaining an exposure parameter value, where the exposure parameter value includes an exposure time value and a photosensitivity value; and when the exposure time value is greater than a first specified value and the photosensitivity value is greater than a second specified value, determining that the current image shooting scene is the low-light image shooting scene.

In a possible implementation, the obtaining a first image shot based on the first camera and a second image shot based on the second camera includes: cropping a focal range of the second camera to a same focal range as the first camera; and obtaining a plurality of frames of first sub-images shot based on the first camera and a plurality of frames of second sub-images shot based on a second camera for which cropping is performed.

It may be understood that, in this embodiment of this application, after the primary camera is turned on, the focal range of the primary camera is digitally cropped to the same focal range as the long-focus camera, so that the primary camera obtains an image with a same angle of view as the long-focus camera.

In a possible implementation, the generating a shot image based on luminance feature information corresponding to the first image and the second image includes: performing image fusion on the plurality of frames of first sub-images to obtain a first fused image, and performing image fusion on the plurality of frames of second sub-images to obtain a second fused image; registering the first fused image and the second fused image to obtain a registered first fused image and a registered second fused image; obtaining high-frequency detail information of the registered first fused image and luminance feature information of the second fused image; and generating the shot image based on the high-frequency detail information of the registered first fused image and the luminance feature information of the second fused image.

It may be understood that, in this embodiment of this application, the first fused image may be a long-focus fused image, and the second fused image may be a primary-camera fused image. Registering the primary-camera fused image and the long-focus fused image can effectively eliminate an image deviation caused by a camera position difference.

In a possible implementation, the performing image fusion on the plurality of frames of first sub-images to obtain a first fused image, and performing image fusion on the plurality of frames of second sub-images to obtain a second fused image includes: registering the plurality of frames of first sub-images to obtain a plurality of frames of registered first sub-images, and performing fusion on the plurality of frames of registered first sub-images to obtain the first fused image; and registering the plurality of frames of second sub-images to obtain a plurality of frames of registered second sub-images, and performing fusion on the plurality of frames of registered second sub-images to obtain the second fused image.

In a possible implementation, the registering the first fused image and the second fused image to obtain a registered first fused image and a registered second fused image includes: registering the first fused image by using the second fused image as a reference image, to obtain the registered first fused image; or registering the second fused image by using the first fused image as a reference image, to obtain the registered second fused image.

In a possible implementation, the registering the second fused image by using the first fused image as a reference image, to obtain the registered second fused image includes: performing feature extraction on both the first fused image and the second fused image to obtain a plurality of feature points in the first fused image and a plurality of feature points in the second fused image; determining matching feature points that are of the plurality of feature points in the first fused image and that are in the plurality of feature points in the second fused image; determining an image affine warp matrix based on offsets between the plurality of feature points in the first fused image and the matching feature points in the second fused image; and performing warp on the second fused image based on the image affine warp matrix to obtain the registered second fused image.

In a possible implementation, the luminance feature information includes luminance information and color information, and the generating the shot image based on the high-frequency detail information of the registered first fused image and the luminance feature information of the second fused image includes: superposing the luminance information of the second fused image and the high-frequency detail information of the first fused image to obtain first fusion information; and performing merging on the first fusion information and the color information of the second fused image to generate the shot image.

According to a second aspect, this application provides an electronic device, including: a memory, configured to store instructions executed by one or more processors of the electronic device; and the processor, where the processor is one of the one or more processors of the electronic device, and is configured to perform the image shooting method mentioned in embodiments of this application.

According to a third aspect, this application provides a readable storage medium. The readable medium stores instructions. When the instructions are executed on an electronic device, the electronic device is enabled to perform the image shooting method mentioned in embodiments of this application.

According to a fourth aspect, this application provides a computer program product, including executable instructions. The executable instructions are stored in a readable storage medium. At least one processor of an electronic device is capable of reading the executable instructions from the readable storage medium. The at least one processor executes the executable instructions, to enable the electronic device to perform the image shooting method mentioned in embodiments of this application.

### BRIEF DESCRIPTION OF DRAWINGS

FIG. 1 is a diagram of an image shooting scene according to some embodiments of this application;
FIG. 2a and FIG. 2b are diagrams of comparison between images shot by different cameras according to some embodiments of this application;
FIG. 3 is a diagram of a structure of an electronic device according to some embodiments of this application;
FIG. 4 is a diagram of a photographing process of an electronic device according to some embodiments of this application;
FIG. 5 is a schematic flowchart of an image shooting method according to some embodiments of this application;
FIG. 6a is a schematic flowchart of a method for performing fusion on a long-focus image and a primary-camera image according to some embodiments of this application;
FIG. 6b is a diagram of a process of performing fusion on a long-focus image and a primary-camera image according to some embodiments of this application;
FIG. 7A and FIG. 7B are a schematic flowchart of an image shooting method according to some embodiments of this application; and
FIG. 8a and FIG. 8b are diagrams of comparison between an image shot by a long-focus camera and a fused image obtained based on an image shooting method in this application according to some embodiments of this application.

### DESCRIPTION OF EMBODIMENTS

Illustrative embodiments of this application include but are not limited to an image shooting method, an electronic device, and a medium.

To resolve the foregoing problem, embodiments of this application provide an image shooting method, applied to an electronic device. The method includes: detecting that the electronic device turns on a long-focus image shooting mode (that is, turns on a long-focus camera); determining whether a current image shooting scene is a low-light image shooting scene, and if the current image shooting scene is the low-light image shooting scene, enabling a primary camera while maintaining the long-focus mode; after detecting a photographing instruction of a user (for example, the user triggers a photographing control), separately obtaining a primary-camera image shot based on the primary camera and a long-focus image shot based on the long-focus camera; and performing fusion on the long-focus image and the primary-camera image to obtain a final fused image, that is, obtaining luminance information and color information of the primary-camera image, obtaining high-frequency detail information of the long-focus image, and obtaining the fused image based on the luminance information and the color information of the primary-camera image and the high-frequency detail information of the long-focus image.

It may be understood that, in this embodiment of this application, photosensitivity of the primary-camera image is good, and details in the long-focus image are clear. Therefore, in this embodiment of this application, after the luminance information and the color information of the primary-camera image are fused with the high-frequency detail information of the long-focus image, a clear image with good photosensitivity can be obtained. In other words, based on the foregoing image shooting method, photosensitivity of an image obtained in a long-focus low-light image shooting scene can be effectively improved, and image quality can be improved.

A manner of learning whether the current scene is the low-light image shooting scene may include: obtaining ambient light luminance based on an ambient light sensor; and when the ambient light luminance is less than a specified value, determining that the current image shooting scene is the low-light image shooting scene;
obtaining a preview image in a long-focus mode, determining an average value of pixels in the preview image; and when the average value is less than a specified value, determining that the current image shooting scene is the low-light image shooting scene; or
obtaining an exposure parameter value, for example, an exposure time value and a photosensitivity value; and when the exposure time value is greater than a first specified value and the photosensitivity value is greater than a second specified value, determining that the current image shooting scene is the low-light image shooting scene.

It may be understood that, in this embodiment of this application, after the primary camera is turned on, a focal range of the primary camera may be digitally cropped to a same focal range as the long-focus camera, so that the primary camera obtains an image with a same angle of view as the long-focus camera.

It may be understood that, in this embodiment of this application, both the primary-camera image obtained based on the primary camera and the long-focus image obtained based on the long-focus camera may be a plurality of frames of images. A manner of performing fusion on the long-focus image and the primary-camera image to obtain the fused image may include:
performing image fusion on a plurality of frames of primary-camera images to obtain a primary-camera fused image, and performing image fusion on a plurality of frames of long-focus images to obtain a long-focus fused image; registering the primary-camera fused image and the long-focus fused image, for example, registering the primary-camera fused image by using the long-focus fused image as a reference image, to obtain a registered primary-camera image; extracting luminance information and color information of the registered primary-camera image and high-frequency detail information of the long-focus fused image; and obtaining the fused image based on the luminance information and the color information of the registered primary-camera image and the high-frequency detail information of the long-focus fused image.

It may be understood that, in this embodiment of this application, a manner of registering the primary-camera fused image and the long-focus fused image may alternatively be: registering the long-focus fused image by using the primary-camera fused image as a reference image, to obtain a registered long-focus image. Registering the primary-camera fused image and the long-focus fused image can effectively eliminate an image deviation caused by a camera position difference.

Before the image shooting method in embodiments of this application is described in detail below, the electronic device in embodiments of this application is first described. It may be understood that the electronic device in embodiments of this application may be a mobile terminal or a fixed terminal, for example, a tablet computer (portable Android device, PAD), a personal digital assistant (personal digital assistant, PDA), a handheld device with a wireless communication function, a computing device, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), or a wireless terminal in a smart home (smart home). A form of the electronic device is not specifically limited in embodiments of this application.

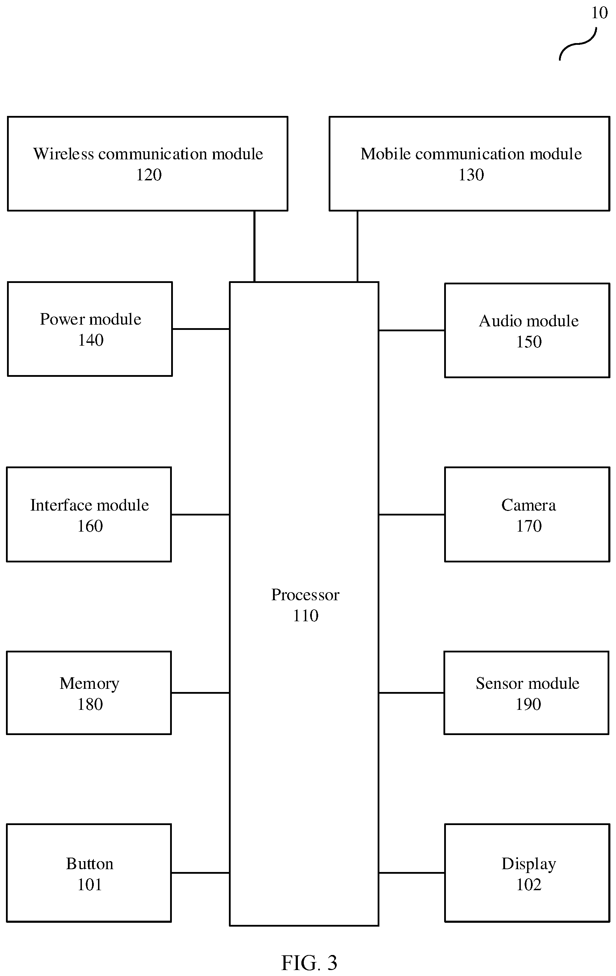

The following uses a mobile phone as an example to describe a hardware structure of the electronic device provided in embodiments of this application. As shown in FIG. 3, a mobile phone 10 may include a processor 110, a power module 140, a memory 180, a mobile communication module 130, a wireless communication module 120, a sensor module 190, an audio module 150, a camera 170, an interface module 160, a button 101, a display 102, and the like.

It may be understood that the structure shown in this embodiment of the present invention does not constitute a specific limitation on the mobile phone 10. In some other embodiments of this application, the mobile phone 10 may include more or fewer components than those shown in the figure, or some components may be combined, or some components may be split, or components are arranged in different manners. The components shown in the figure may be implemented by hardware, software, or a combination of software and hardware.

The processor 110 may include one or more processing units, for example, may include a processing module or a processing circuit of a central processing unit (Central Processing Unit, CPU), a graphics processing unit (Graphics Processing Unit, GPU), a digital signal processor DSP, a micro-programmed control unit (Micro-programmed Control Unit, MCU), an artificial intelligence (Artificial Intelligence, AI) processor, a programmable logic device (Field Programmable Gate Array, FPGA), or the like. Different processing units may be independent components, or may be integrated into one or more processors. A storage unit may be disposed in the processor 110, and is configured to store instructions and data. In some embodiments, the storage unit in the processor 110 is a cache 180.

The processor may be configured to perform the image shooting method provided in embodiments of this application.

The power module 140 may include a power supply, a power management component, and the like. The power supply may be a battery. The power management component is configured to manage charging of the power supply and power supply of the power supply to another module. In some embodiments, the power management component includes a charging management module and a power management module. The charging management module is configured to receive a charging input from a charger. The power management module is configured to connect the power supply, the charging management module, and the processor 110. The power management module receives an input from the power supply and/or the charging management module, and supplies power to the processor 110, the display 102, the camera 170, the wireless communication module 120, and the like.

The mobile communication module 130 may include but is not limited to an antenna, a power amplifier, a filter, an LNA (Low noise amplifier, low noise amplifier), and the like. The mobile communication module 130 may provide a wireless communication solution that is applied to the mobile phone 10 and that includes 2G/3G/4G/5G or the like. The mobile communication module 130 may receive an electromagnetic wave by using the antenna, perform processing such as filtering or amplification on the received electromagnetic wave, and transmit a processed electromagnetic wave to a modem processor for demodulation. The mobile communication module 130 may further amplify a signal modulated by the modem processor, and convert an amplified signal into an electromagnetic wave for radiation by using the antenna. In some embodiments, at least some functional modules of the mobile communication module 130 may be disposed in the processor 110. In some embodiments, at least some functional modules of the mobile communication module 130 and at least some modules of the processor 110 may be disposed in a same component. A wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), Bluetooth (Bluetooth, BT), a global navigation satellite system (global navigation satellite system, GNSS), a wireless local area network (wireless local area network, WLAN), a near field communication (near field communication, NFC) technology, frequency modulation (frequency modulation, FM), field communication (NFC), an infrared (infrared, IR) technology (technology), and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite systems, QZSS), and/or a satellite based augmentation system (satellite based augmentation system, SBAS).

The wireless communication module 120 may include an antenna, and receive and send an electromagnetic wave by using the antenna. The wireless communication module 120 may provide a wireless communication solution that is applied to the mobile phone 10, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The mobile phone 10 may communicate with a network and another device by using a wireless communication technology.

In some embodiments, the mobile communication module 130 and the wireless communication module 120 that are of the mobile phone 10 may alternatively be located in a same module.

The display 102 is configured to display a man-machine interaction interface, an image, a video, and the like. The display 102 includes a display panel. The display panel may be a liquid crystal display (liquid crystal display, LCD), an organic light-emitting diode (organic light-emitting diode, OLED), an active-matrix organic light-emitting diode or an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like.

The sensor module 190 may include an optical proximity sensor, a pressure sensor, a gyroscope sensor, a barometric pressure sensor, a magnetic sensor, an acceleration sensor, a distance sensor, a fingerprint sensor, a temperature sensor, a touch sensor, an ambient light sensor, a bone conduction sensor, and the like. The gyroscope sensor may be configured to determine information such as shake of the mobile phone.

The audio module 150 is configured to convert digital audio information into an analog audio signal for output, or convert an analog audio input into a digital audio signal. The audio module 150 may be further configured to encode and decode an audio signal. In some embodiments, the audio module 150 may be disposed in the processor 110, or some functional modules of the audio module 150 are disposed in the processor 110. In some embodiments, the audio module 150 may include a speaker, an earpiece, a microphone, and a headset jack.

The camera 170 is configured to capture a static image or a video. An optical image of an object is generated through a lens, and is projected onto a photosensitive element. The photosensitive element converts an optical signal into an electrical signal, and then transmits the electrical signal to an ISP (Image Signal Processor, image signal processor) to convert the electrical signal into a digital image signal. The mobile phone 10 may implement an image shooting function by using the ISP, the camera 170, a video codec, the GPU (Graphics Processing Unit, graphics processing unit), the display 102, an application processor, and the like.

It may be understood that, in this embodiment of this application, the camera 170 may include a primary camera and a long-focus camera, or may include another camera. The primary camera is generally a lens with a focal length of about 27 mm, and is configured to shoot a medium-angle scene. The long-focus camera is generally a lens with a focal length of more than 50 mm, and is configured to shoot a close-up scene.

The interface module 160 includes an external memory interface, a universal serial bus (universal serial bus, USB) interface, a subscriber identity module (subscriber identity module, SIM) card interface, and the like. The external memory interface may be configured to connect to an external memory card, for example, a micro SD card, to expand a storage capability of the mobile phone 10. The external memory card communicates with the processor 110 by using the external memory interface, to implement a data storage function. The universal serial bus interface is used for communication between the mobile phone 10 and another electronic device. The subscriber identity module card interface is configured to communicate with a SIM card installed on the mobile phone 1010, for example, read phone number stored in the SIM card, or write phone number into the SIM card.

In some embodiments, the mobile phone 10 further includes the button 101, a motor, an indicator, and the like. The button 101 may include a volume button, a power-on/power-off button, and the like. The motor is configured to enable the mobile phone 10 to generate vibration effect, for example, generate vibration when the mobile phone 10 of the user is called, to prompt the user to answer an incoming call of the mobile phone 10. The indicator may include a laser indicator, a radio frequency indicator, an LED indicator, and the like.

For ease of understanding the solutions of this application, the following embodiment of this application briefly describes a photographing process of the electronic device in an embodiment of this application by using a part of a structure of the electronic device shown in FIG. 3 as an example.

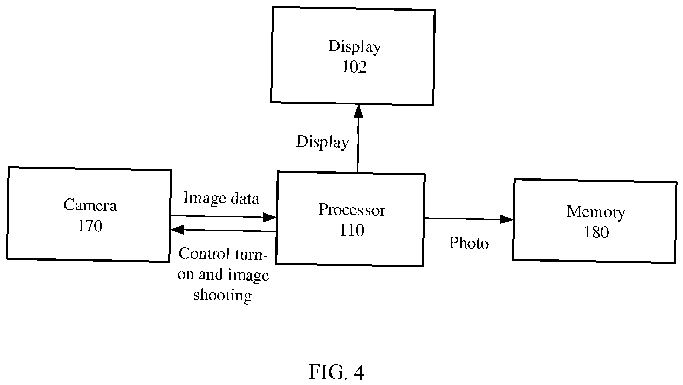

As shown in FIG. 4, when detecting an instruction of the user for enabling the long-focus camera, for example, when detecting that the user adjusts a zoom ratio to be greater than or equal to a specified ratio, the processor may control the long-focus camera to be turned on. The processor may determine whether an image shooting scene is a low-light image shooting scene, and if a determining result is yes, the processor controls the primary camera to be turned on while keeping a long-focus mode turned on. In addition, when detecting a photographing instruction of the user, the processor may control the long-focus camera and the primary camera to perform image shooting, to separately obtain corresponding image data, for example, including a long-focus image and a primary-camera image. Further, the processor may perform fusion on the image data, to obtain a fused image (namely, a photo) and store the fused image in the memory. In addition, the processor may further control, based on a user instruction, the display to display a corresponding image.

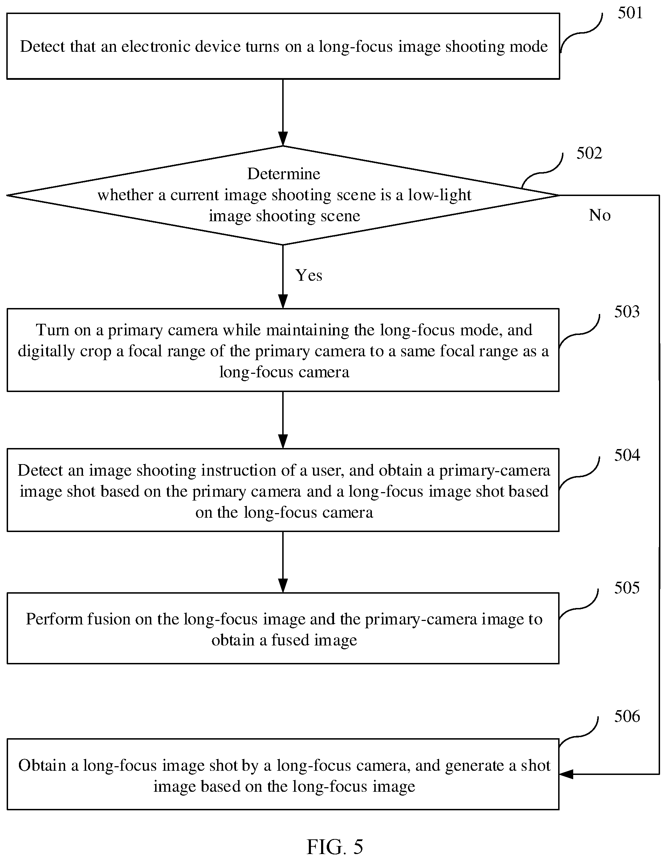

The following describes the image shooting method mentioned in embodiments of this application with reference to the electronic device. FIG. 5 is a schematic flowchart of an image shooting method according to an embodiment of this application. The image shooting method in FIG. 5 may be performed by an electronic device, and the image shooting method includes the following steps.

501: Detect that the electronic device turns on a long-focus image shooting mode.

It may be understood that, in this embodiment of this application, the electronic device may turn on a long-focus camera when detecting that a user selects an image shooting parameter with a zoom ratio greater than or equal to a specified ratio. It may be understood that the specified ratio may vary in different electronic devices. For example, some electronic devices may turn on long-focus cameras when detecting that users select zoom ratios greater than or equal to 2.0x; and other electronic devices may turn on long-focus cameras when detecting that users select zoom ratios greater than or equal to 3.0x.

It may be understood that, in this embodiment of this application, when detecting that the electronic device turns on the long-focus camera, the electronic device determines that the long-focus image shooting mode is turned on for the electronic device.

502: Determine whether a current image shooting scene is a low-light image shooting scene; and if a determining result is yes, go to 503: Turn on a primary camera while maintaining the long-focus mode; or if a determining result is no, go to 506: Obtain a long-focus image shot by the long-focus camera, and generate a shot image based on the long-focus image.

It may be understood that, in this embodiment of this application, a manner of learning whether the current scene is the low-light image shooting scene may include: obtaining ambient light luminance based on an ambient light sensor; and when the ambient light luminance lux is less than a specified value, for example, less than 10 lux, determining that the current image shooting scene is the low-light image shooting scene;
obtaining a preview image in the long-focus mode, determining an average value lum of pixels in the preview image; and when the average value lum is less than a specified value, for example, less than 10, determining that the current image shooting scene is the low-light image shooting scene; or
obtaining an exposure parameter value, for example, an exposure time (expo) value and a photosensitivity (ISO) value; and when the expo value is greater than a first specified value, for example, expo>50 ms, and the ISO value is greater than a second specified value, for example, ISO>5000, determining that the current image shooting scene is the low-light image shooting scene.

503: Turn on the primary camera while maintaining the long-focus mode, and digitally crop a focal range of the primary camera to a same focal range as the long-focus camera.

It may be understood that, in this embodiment of this application, when it is determined that the image shooting scene is the low-light image shooting scene, the long-focus camera and the primary camera may be simultaneously turned on, to separately obtain images shot by the long-focus camera and the primary camera.

It may be understood that, in this embodiment of this application, the focal range of the primary camera may be digitally cropped to the same focal range or a same angle of view as the long-focus camera, so that an image with the same angle of view as the long-focus camera is obtained.

504: Detect an image shooting instruction of the user, and obtain a primary-camera image shot based on the primary camera and a long-focus image shot based on the long-focus camera.

It may be understood that, in this embodiment of this application, the image shooting instruction of the user may be the user tapping a photographing control, or sending a remote control instruction such as a voice instruction or a body movement corresponding to a photographing operation.

It may be understood that, in this embodiment of this application, both the primary-camera image obtained based on the primary camera and the long-focus image obtained based on the long-focus camera may be a plurality of frames of images.

505: Perform fusion on the long-focus image and the primary-camera image to obtain a fused image.

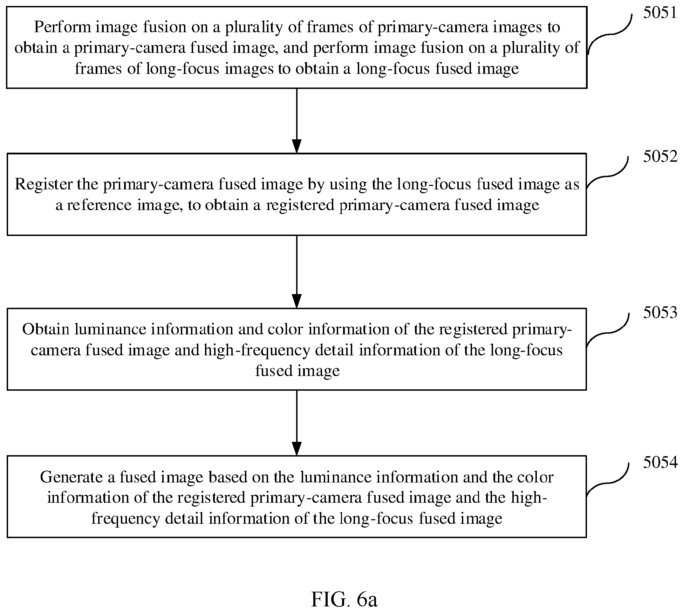

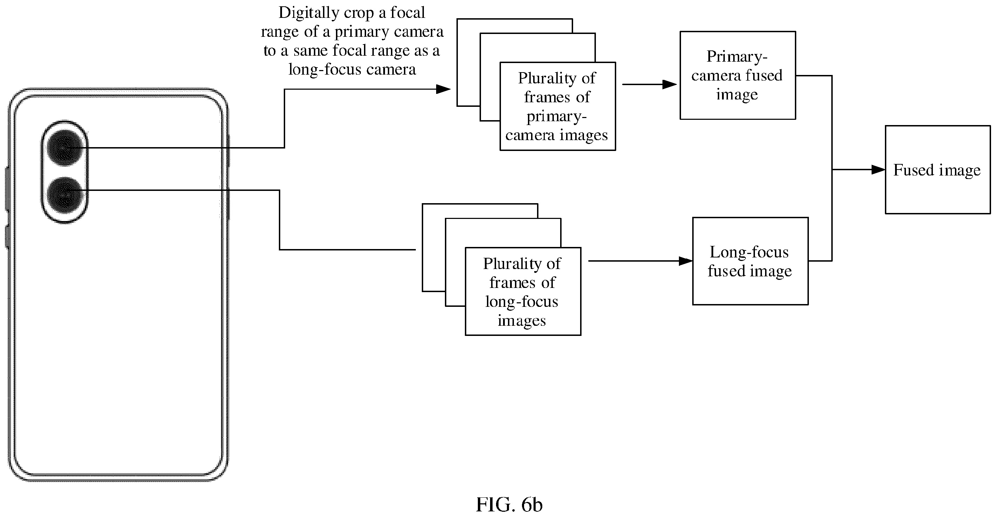

It may be understood that, in this embodiment of this application, a manner of performing fusion on the long-focus image and the primary-camera image to obtain the fused image may be shown in FIG. 6a and FIG. 6b, and includes the following steps.

5051: Perform image fusion on a plurality of frames of primary-camera images to obtain a primary-camera fused image, and perform image fusion on a plurality of frames of long-focus images to obtain a long-focus fused image.

A manner of performing fusion on the plurality of frames of primary-camera images to obtain the corresponding primary-camera fused image may be: registering other frames of images by using a first frame of image of the plurality of frames of primary-camera images captured by the primary camera as a reference image, to obtain registered images respectively corresponding to the other frames of images; and then, performing fusion on the first frame of image and the registered images respectively corresponding to the other frames of images to obtain a final primary-camera fused image.

A fusion manner may be: performing fusion on the first frame of image and a registered image corresponding to a second frame of image, that is, performing averaging processing on corresponding pixel values in the first frame of image and the registered image corresponding to the second frame of image, to obtain a first fused image; then performing same fusion on the first fused image and a registered image corresponding to a third frame of image to obtain a second fused image; and continuing to perform the foregoing fusion until a last frame of image is fused, to obtain the final primary-camera fused image.

In some embodiments, a fusion manner may alternatively be: simultaneously performing averaging processing on the first frame of image and the registered images respectively corresponding to the other frames of images to obtain the final primary-camera fused image.

It may be understood that, in this embodiment of this application, other frames of images may be registered by using any one of the plurality of frames of primary-camera images captured by the primary camera as a reference image, to obtain registered images respectively corresponding to the other frames of images. In this embodiment of this application, a plurality of frames of images obtained by a same camera are registered, so that a difference between the plurality of frames of images due to camera shake or the like can be effectively eliminated.

The following describes a registration method in this embodiment of this application by using an example in which the second frame of image is registered with reference to the first frame of image.

First, feature extraction is performed on both the first frame of image and the second frame of image, to obtain a plurality of feature points in the first frame of image and a plurality of feature points in the second frame of image. In some embodiments, feature extraction may be performed on the first frame of image and the second frame of image by using a surf operator.

Corresponding matching feature points are found in the second frame of image based on the plurality of feature points in the first frame of image.

An image affine warp (warp) matrix H is determined based on offsets between the feature points in the first frame of image and the corresponding matching feature points in the second frame of image.

Warp is performed on the second frame of image based on the warp matrix H to obtain a registered second frame of image. The first frame of image remains unchanged.

The following describes a manner in which fusion is performed on the plurality of frames of primary -camera images to obtain a primary-camera fused image by using an example in which the plurality of frames of primary-camera images captured by the primary camera are sequentially a first frame of image I1, a second frame of image I2, a third frame of image I3, and a fourth frame of image I4. In an implementation, a fusion manner may be described as follows.

First, the second frame of image I2, the third frame of image I3, and the fourth frame of image I4 are registered with reference to the first frame of image I1, to obtain a registered image I2', a registered image I3', and a registered image 14' respectively corresponding to the second frame of image I2, the third frame of image I3, and the fourth frame of image I4.

Average processing is performed on pixel values of corresponding positions of the first frame of image 11 and the registered image I2' corresponding to the second frame of image I2 to obtain a first fused image. A manner of calculating each pixel in the first fused image I₀₁, for example, a pixel value I₀₁(x, y) of a pixel (x, y), is as follows: I₀₁(x, y)=0.5*I1(x, y)+0.5*I2'(x, y). I1(x, y) is a pixel value of a pixel (x, y) in the first frame of image I1, and I2'(x, y) is a pixel value of a pixel (x, y) in the registered image I2' corresponding to the second frame of image I2.

Then, averaging processing is performed on pixels at corresponding positions of the first fused image I₀₁ and the registered image I3' corresponding to the third frame of image I3 to obtain a second fused image I₀₂. A manner of calculating each pixel in the second fused image I₀₂, for example, a pixel value I₀₁(x, y) of a pixel (x, y), is as follows: I₀₂(x, y)=0.5*I₀₁(x, y)+0.5*I3'(x, y). I₀₁(x, y) is the pixel value of the pixel (x, y) in the first fused image I₀₁, and I3'(x, y) is a pixel value of a pixel (x, y) in the registered image I3' corresponding to the third frame of image I3.

After that, averaging processing is performed on pixels at corresponding positions of the second fused image I₀₂ and the registered image I4' corresponding to the fourth frame of image I4 to obtain a final primary-camera fused image I₀₃. A manner of calculating each pixel in the primary-camera fused image I₀₃, for example, a pixel value I₀₃(x, y) of a pixel (x, y), is as follows: I₀₃(x, y)=0.5*I₀₂(x, y)+0.5*I4'(x, y). I₀₂(x, y) is the pixel value of the pixel (x, y) of the second fused image I₀₂, and I4'(x, y) is a pixel value of a pixel (x, y) in the registered image I4' corresponding to the fourth frame of image I4.

In another implementation, a manner of performing fusion on the plurality of frames of primary -camera images may alternatively be described as follows.

First, the second frame of image I2, the third frame of image I3, and the fourth frame of image I4 are registered with reference to the first frame of image I1, to obtain a registered image I2', a registered image I3', and a registered image I4' respectively corresponding to the second frame of image I2, the third frame of image I3, and the fourth frame of image I4.

Average processing is performed on pixel values of corresponding positions of the first frame of image I1, the registered image I2' corresponding to the second frame of image I2, the registered image I3' corresponding to the third frame of image I3, and the registered image I4' corresponding to the fourth frame of image I4 to obtain a primary-camera fused image. A manner of calculating each pixel in the primary-camera fused image I₀₃, for example, a pixel value I₀₃(x, y) of a pixel (x, y), is as follows: I₀₃(x, y)=0.25*I1(x, y)+0.25*I2'(x, y)+0.25*I3'(x, y)+0.25*I4'(x, y).

I1(x, y) is a pixel value of a pixel (x, y) in the first frame of image I1, I2'(x, y) is a pixel value of a pixel (x, y) in the registered image I2' corresponding to the second frame of image I2, I3'(x, y) is a pixel value of a pixel (x, y) in the registered image I3' corresponding to the third frame of image I3, and I4'(x, y) is a pixel value of a pixel (x, y) in the registered image I4' corresponding to the fourth frame of image I4.

It may be understood that, in this embodiment of this application, a manner of performing image fusion on the plurality of frames of long-focus images to obtain the long-focus fused image is similar to the manner of performing fusion on the plurality of frames of primary-camera images to obtain the corresponding primary-camera fused image. Details are not described herein again.

5052: Register the primary-camera fused image by using the long-focus fused image as a reference image, to obtain a registered primary-camera fused image.

It may be understood that, in this embodiment of this application, a manner of registering the long-focus fused image and the primary-camera fused image may be registering the primary-camera fused image by using the long-focus fused image as a reference image, or may be registering the long-focus fused image by using the primary-camera fused image as a reference image. It may be understood that, in this embodiment of this application, registering the primary-camera fused image and the long-focus fused image can effectively eliminate an image deviation caused by a camera position difference.

The following describes a registration manner in this embodiment of this application through registering the primary-camera fused image by using the long-focus fused image as the reference image.

First, feature extraction is performed on both the long-focus fused image and the primary-camera fused image to obtain a plurality of feature points in the long-focus fused image and a plurality of feature points in the primary-camera fused image. In some embodiments, feature extraction may be performed on the long-focus fused image and the primary-camera fused image by using a surf operator.

Corresponding matching feature points are found in the primary-camera fused image based on the plurality of feature points in the long-focus fused image.

An image affine warp (warp) matrix H is determined based on offsets between the feature points in the long-focus fused image and the corresponding matching feature points in the primary-camera fused image.

Warp is performed on the primary-camera fused image based on the warp matrix H to obtain the registered primary-camera fused image. The long-focus fused image remains unchanged.

5053: Obtain luminance information and color information of the registered primary-camera fused image and high-frequency detail information of the long-focus fused image.

It may be understood that, in this embodiment of this application, the luminance information may include a luminance component, the color information may include a chrominance component, and the high-frequency detail information may be a high-frequency detail component (a high-frequency signal).

In this embodiment of this application, the luminance component Y and the chrominance component UV of the primary-camera fused image may be obtained based on RGB information and YUV information of the primary-camera fused image.

For the long-focus fused image, a manner of obtaining the high-frequency detail component I2_hpf of the image may be: subtracting a low-frequency detail component (a low-frequency signal) of the long-focus image from an overall signal of the long-focus image, that is, I2_hpf=I2a-I2_lpf, where I2_lpf is the low-frequency detail component of the long-focus fused image, and I2a is the overall detail signal of the long-focus image.

A manner of obtaining the low-frequency detail component I2_lpf of the long-focus fused image may be: downsampling the long-focus fused image to a 1/4 size, and then upsampling a downsampled long-focus fused image to an original size, to obtain I2_lpf.

5054: Generate the fused image based on the luminance information and the color information of the registered primary-camera fused image and the high-frequency detail information of the long-focus fused image.

It may be understood that, in this embodiment of this application, a manner of generating the fused image based on the luminance information and the color information of the registered primary-camera fused image and the high-frequency detail information of the long-focus fused image may be:
superimposing the luminance component of the primary-camera fused image and the high-frequency detail component of the long-focus fused image to obtain a fused luminance component, for example, a manner of calculating the fused luminance component Y' is: Y'=Y+I2_hpf, where Y is the luminance component of the primary-camera fused image, and I2_hpf is the high-frequency detail component of the long-focus fused image; and
combining the luminance component and the color component to obtain a final fused image, for example, the fused image Io=YUV2RGB(Y', UV).

406: Obtain the long-focus image shot by the long-focus camera, and generate the shot image based on the long-focus image.

It may be understood that, in this embodiment of this application, if the current image shooting scene is not the low-light image shooting scene, a final shot image may be generated based on the long-focus image shot by the long-focus camera.

It may be understood that, in some embodiments, the long-focus image shot by the long-focus camera may include a plurality of frames of images.

A manner of generating final shooting based on the long-focus image may be: performing image fusion on a plurality of frames of long-focus images to obtain the final shot image. A manner of performing image fusion on the plurality of frames of long-focus images to obtain a long-focus fused image is similar to the manner of performing fusion on the plurality of frames of primary-camera images to obtain the corresponding primary-camera fused image. Details are not described herein again.

Based on the foregoing solution, photosensitivity of an image obtained in long-focus low-light image shooting can be effectively improved. During high-ratio low-light photographing, a plurality of frames of primary-camera images and a plurality of frames of long-focus images are simultaneously captured, and then image registration and luminance and detail fusion are performed, so that luminance and definition of a night long-focus shot image can be effectively improved.

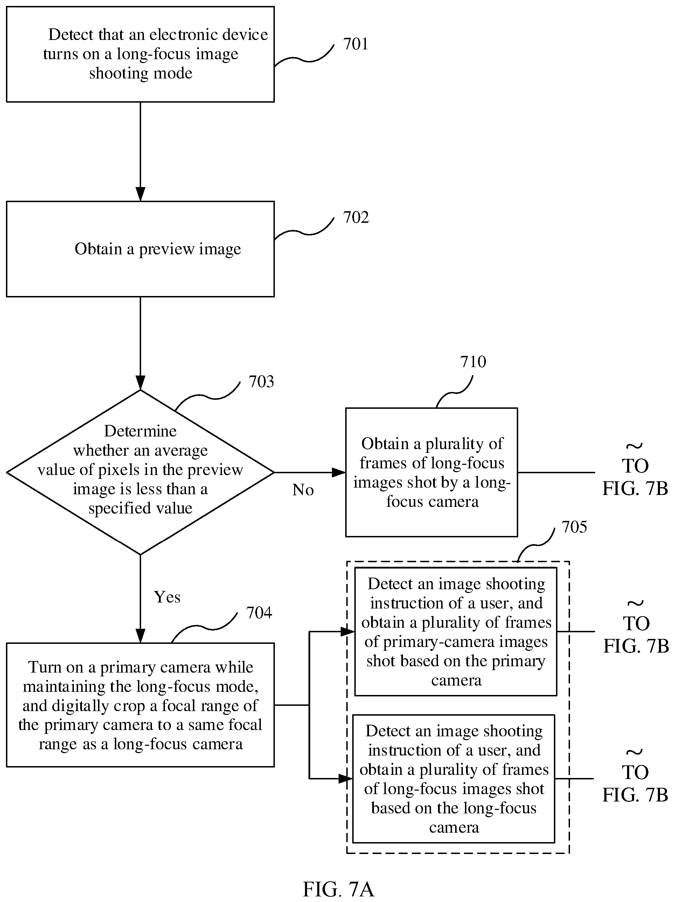

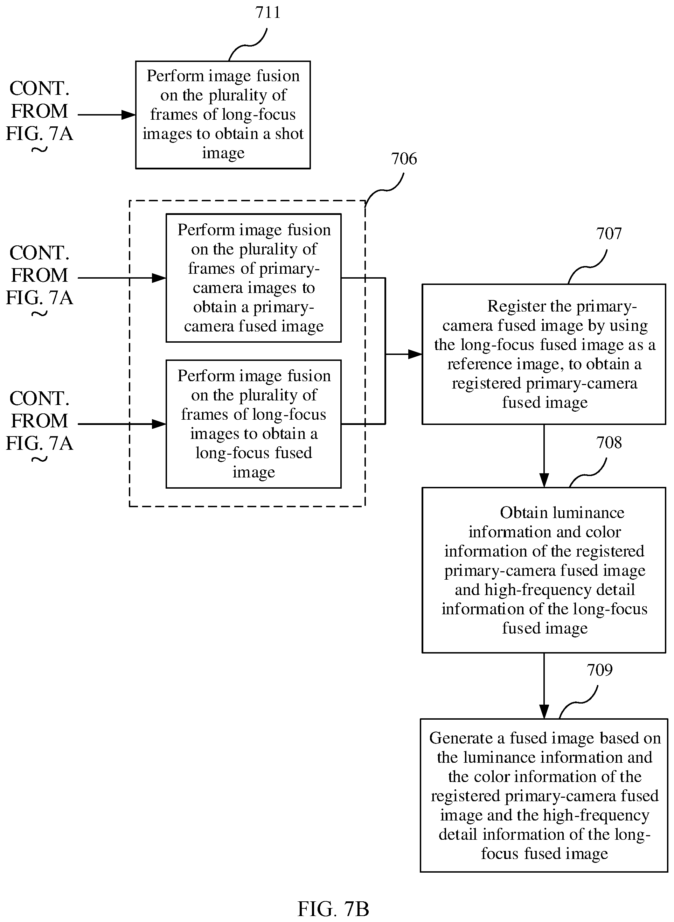

The following describes an image shooting method in an embodiment of this application by using an example in which a current image shooting scene is determined based on a preview image. As shown in FIG. 7A and FIG. 7B, the method may include the following steps.

701: Detect that an electronic device turns on a long-focus image shooting mode.

It may be understood that, in this embodiment of this application, 701 is similar to 501. Details are not described herein again.

702: Obtain a preview image.

It may be understood that, in this embodiment of this application, the preview image may be a preview image in the long-focus mode.

703: Determine whether an average value of pixels in the preview image is less than a specified value, and if the average value of the pixels in the preview image is less than the specified value, go to 704: Turn on a primary camera while maintaining the long-focus mode; or if the average value of the pixels in the preview image is not less than the specified value, go to 710: Obtain a plurality of frames of long-focus images shot by a long-focus camera.

704: Turn on the primary camera while maintaining the long-focus mode, and digitally crop a focal range of the primary camera to a same focal range as the long-focus camera.

It may be understood that, in this embodiment of this application, 704 is similar to 503. Details are not described herein again.

705: Detect an image shooting instruction of a user, and obtain a plurality of frames of primary -camera images shot based on the primary camera and a plurality of frames of long-focus images shot based on the long-focus camera.

It may be understood that, in this embodiment of this application, the image shooting instruction of the user may be the user tapping a photographing control, or sending a remote control instruction such as a voice instruction or a body movement corresponding to a photographing operation.

It may be understood that, in this embodiment of this application, both the primary-camera image obtained based on the primary camera and the long-focus image obtained based on the long-focus camera may be a plurality of frames of images.

It may be understood that, in this embodiment of this application, 705 is similar to 504. Details are not described herein again.

706: Perform image fusion on the plurality of frames of primary-camera images to obtain a primary-camera fused image, and perform image fusion on the plurality of frames of long-focus images to obtain a long-focus fused image.

It may be understood that, in this embodiment of this application, 705 is similar to 5051. Details are not described herein again.

707: Register the primary-camera fused image by using the long-focus fused image as a reference image, to obtain a registered primary-camera fused image.

It may be understood that, in this embodiment of this application, 707 is similar to 5052. Details are not described herein again.

708: Obtain luminance information and color information of the registered primary-camera fused image and high-frequency detail information of the long-focus fused image.

It may be understood that, in this embodiment of this application, 708 is similar to 5053. Details are not described herein again.

709: Generate a shot image based on the luminance information and the color information of the registered primary-camera fused image and the high-frequency detail information of the long-focus fused image.

It may be understood that, in this embodiment of this application, 709 is similar to 5054. Details are not described herein again.

710: Obtain the plurality of frames of long-focus images shot by the long-focus camera.

711: Perform image fusion on the plurality of frames of long-focus images to obtain a shot image.

It may be understood that, in this embodiment of this application, a manner of performing image fusion on the plurality of frames of long-focus images to obtain a long-focus fused image is similar to the manner of performing fusion on the plurality of frames of primary-camera images to obtain the corresponding primary-camera fused image. Details are not described herein again.

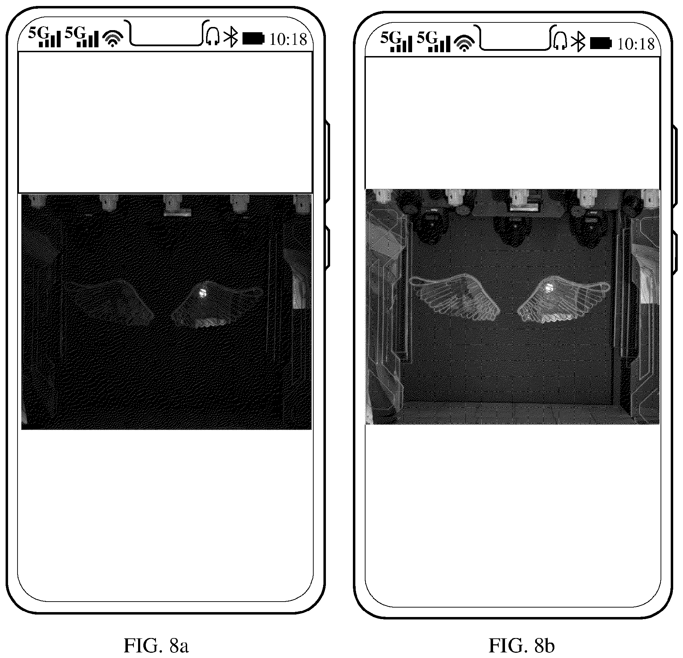

FIG. 8a and FIG. 8b respectively show an image shot in a long-focus mode alone and an image shot by using an image shooting method in this application in a low-light scene according to an embodiment of this application. It can be learned from FIG. 8 and FIG. 8b that during high-ratio low-light photographing, a plurality of frames of primary-camera images and a plurality of frames of long-focus images are simultaneously captured, and then image registration and luminance and detail fusion are performed, so that luminance and definition of a night long-focus shot image can be effectively improved.

Embodiments disclosed in this application may be implemented in hardware, software, firmware, or a combination of these implementation methods. Embodiments of this application may be implemented as a computer program or program code executed on a programmable system. The programmable system includes at least one processor, a storage system (including volatile and non-volatile memories and/or a storage element), at least one input device, and at least one output device.

The program code may be applied to input instructions to perform the functions described in this application and generate output information. The output information may be applied to one or more output devices in a known manner. For a purpose of this application, a processing system includes any system with a processor such as a digital signal processor (DSP), a microcontroller, an application-specific integrated circuit (ASIC), or a microprocessor.

The program code may be implemented in a high-level programming language or an object-oriented programming language to communicate with the processing system. The program code may alternatively be implemented in an assembly language or a machine language when required. Actually, the mechanism described in this application is not limited to a scope of any particular programming language. In any case, the language may be a compiled language or an interpretive language.

In some cases, the disclosed embodiments may be implemented in hardware, firmware, software, or any combination thereof. The disclosed embodiments may alternatively be implemented as instructions carried by or stored on one or more temporary or non-temporary machine-readable (for example, computer-readable) storage media, and the instructions may be read and executed by one or more processors. For example, the instructions may be distributed through a network or by another computer-readable medium. Therefore, the machine-readable medium may include any mechanism for storing or transmitting information in a machine (for example, a computer)-readable form, including but not limited to a floppy disk, a compact disc, an optical disc, a read-only memory (CD-ROM), a magnetic optical disk, a read-only memory (ROM), a random access memory (RAM), an erasable programmable read-only memory (EPROM), an electrically erasable programmable read-only memory (EEPROM), a magnetic card, an optical card, a flash memory, or a tangible machine-readable memory for transmitting information (for example, a carrier, an infrared signal, or a digital signal) by using a propagating signal in an electrical, optical, acoustic, or another form over the Internet. Therefore, the machine-readable medium includes any type of machine-readable medium suitable for storing or transmitting an electronic instruction or information in a machine (for example, a computer)-readable form.

In the accompanying drawings, some structural or method features may be shown in a particular arrangement and/or order. However, it should be understood that such a particular arrangement and/or order may not be needed. In some embodiments, these features may be arranged in a manner and/or order different from those/that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in the device embodiments of this application are logic units/modules. Physically, one logic unit/module may be one physical unit/module, or may be a part of one physical unit/module, or may be implemented by a combination of a plurality of physical units/modules. Physical implementations of these logic units/modules are not the most important, and a combination of functions implemented by these logic units/modules is a key to resolving technical problems proposed in this application. In addition, to highlight an innovative part of this application, a unit/module that is not closely related to resolving the technical problems proposed in this application is not introduced in the foregoing device embodiments of this application. This does not mean that there are no other units/modules in the foregoing device embodiments.

It should be noted that, in examples and the specification of this patent, relational terms such as first and second are only used to distinguish one entity or operation from another entity or operation, and do not necessarily require or imply that any actual relationship or sequence exists between these entities or operations. Moreover, the terms "include", "contain", or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude other same elements existing in the process, the method, the article, or the device that includes the element.

Although this application has been illustrated and described with reference to some preferred embodiments of this application, a person of ordinary skill in the art should understand that various changes may be made to this application in form and detail without departing from the scope of this application.

## Claims

1. An image shooting method, applied to an electronic device, wherein the electronic device comprises a first camera and a second camera, and the method comprises:
detecting that the electronic device turns on the first camera;
when determining that a current image shooting scene is a low-light image shooting scene, in response to an image shooting instruction of a user, obtaining a first image shot based on the first camera and a second image shot based on the second camera, wherein a focal length of the first camera is greater than a focal length of the second camera; and
generating a shot image based on luminance feature information corresponding to the first image and the second image.

2. The method according to claim 1, wherein the electronic device turns on the first camera when detecting that the user selects an image shooting parameter greater than or equal to a specified ratio.

3. The method according to claim 1 or 2, wherein a manner of determining that the current image shooting scene is the low-light image shooting scene comprises:
obtaining ambient light luminance; and
when the ambient light luminance is less than a specified value, determining that the current image shooting scene is the low-light image shooting scene.

4. The method according to claim 1 or 2, wherein a manner of determining that the current image shooting scene is the low-light image shooting scene comprises:
obtaining a preview image based on the first camera;
determining an average value of pixels in the preview image; and
when the average value is less than a specified value, determining that the current image shooting scene is the low-light image shooting scene.

5. The method according to claim 1 or 2, wherein a manner of determining that the current image shooting scene is the low-light image shooting scene comprises:
obtaining an exposure parameter value, wherein the exposure parameter value comprises an exposure time value and a photosensitivity value; and
when the exposure time value is greater than a first specified value and the photosensitivity value is greater than a second specified value, determining that the current image shooting scene is the low-light image shooting scene.

6. The method according to claim 1 or 2, wherein the obtaining a first image shot based on the first camera and a second image shot based on the second camera comprises:
cropping a focal range of the second camera to a same focal range as the first camera; and
obtaining a plurality of frames of first sub-images shot based on the first camera and a plurality of frames of second sub-images shot based on a second camera for which cropping is performed.

7. The method according to claim 6, wherein the generating a shot image based on luminance feature information corresponding to the first image and the second image comprises:
performing image fusion on the plurality of frames of first sub-images to obtain a first fused image, and performing image fusion on the plurality of frames of second sub-images to obtain a second fused image;
registering the first fused image and the second fused image to obtain a registered first fused image and a registered second fused image;
obtaining high-frequency detail information of the registered first fused image and luminance feature information of the second fused image; and
generating the shot image based on the high-frequency detail information of the registered first fused image and the luminance feature information of the second fused image.

8. The method according to claim 7, wherein the performing image fusion on the plurality of frames of first sub-images to obtain a first fused image, and performing image fusion on the plurality of frames of second sub-images to obtain a second fused image comprises:
registering the plurality of frames of first sub-images to obtain a plurality of frames of registered first sub-images, and performing fusion on the plurality of frames of registered first sub-images to obtain the first fused image; and
registering the plurality of frames of second sub-images to obtain a plurality of frames of registered second sub-images, and performing fusion on the plurality of frames of registered second sub-images to obtain the second fused image.

9. The method according to claim 7, wherein the registering the first fused image and the second fused image to obtain a registered first fused image and a registered second fused image comprises:
registering the first fused image by using the second fused image as a reference image, to obtain the registered first fused image; or
registering the second fused image by using the first fused image as a reference image, to obtain the registered second fused image.

10. The method according to claim 9, wherein the registering the second fused image by using the first fused image as a reference image, to obtain the registered second fused image comprises:
performing feature extraction on both the first fused image and the second fused image to obtain a plurality of feature points in the first fused image and a plurality of feature points in the second fused image;
determining matching feature points that are of the plurality of feature points in the first fused image and that are in the plurality of feature points in the second fused image;
determining an image affine warp matrix based on offsets between the plurality of feature points in the first fused image and the matching feature points in the second fused image; and
performing warp on the second fused image based on the image affine warp matrix to obtain the registered second fused image.

11. The method according to claim 7, wherein the luminance feature information comprises luminance information and color information, and the generating the shot image based on the high-frequency detail information of the registered first fused image and the luminance feature information of the second fused image comprises:
superposing the luminance information of the second fused image and the high-frequency detail information of the first fused image to obtain first fusion information; and
performing merging on the first fusion information and the color information of the second fused image to generate the shot image.

12. An electronic device, comprising: a memory, configured to store instructions executed by one or more processors of the electronic device; and the processor, wherein the processor is one of the one or more processors of the electronic device, and is configured to perform the image shooting method according to any one of claims 1 to 11.

13. A readable storage medium, wherein the readable medium stores instructions, and when the instructions are executed on an electronic device, the electronic device is enabled to perform the image shooting method according to any one of claims 1 to 11.

14. A computer program product, comprising executable instructions, wherein the executable instructions are stored in a readable storage medium, at least one processor of an electronic device is capable of reading the executable instructions from the readable storage medium, and the at least one processor executes the executable instructions, to enable the electronic device to perform the image shooting method according to any one of claims 1 to 11.
